# EUROPÄISCHE PATENTSCHRIFT

(11) **EP 4 090 584 B1**
(45) Veröffentlichungstag und Bekanntmachung des Hinweises auf die Patenterteilung: **29.10.2025**
(21) Anmeldenummer: 21707151.3
(22) Anmeldetag: 11.01.2021
(51) Int. Cl.: B62J 7/04, B62J 7/08

(54) **ADAPTERSYSTEM ZUR ANBRINGUNG VON TASCHEN ODER BEHÄLTERN AN GEPÄCKTRÄGERN**
ADAPTER SYSTEM FOR ATTACHING PANNIERS OR CONTAINERS TO LUGGAGE CARRIERS
SYSTÈME D'ADAPTATEUR PERMETTANT DE FIXER DES SACOCHES OU DES RÉCIPIENTS À DES PORTE-BAGAGES

(30) Priorität: 14.01.2020 DE 202020000129 U
(43) Veröffentlichungstag der Anmeldung: 23.11.2022
(73) Patentinhaber: Ortlieb Sportartikel GmbH, 91560 Heilsbronn (DE)
(72) Erfinder: ORTLIEB, Hartmut, 91560 Heilsbronn (DE)
(74) Vertreter: Schuhmann, Albrecht
(86) Internationale Anmeldenummer: PCT/DE2021/000003
(87) Internationale Veröffentlichungsnummer: WO 2021/143973

(56) Entgegenhaltungen:
- EP-A1- 3 281 852
- DE-U1- 202013 101 143
- DE-U1- 202019 004 035

## Beschreibung

Die vorliegende Erfindung betrifft ein Adaptersystem zur Anbringung von Taschen oder Behältern auf der Oberseite eines Gepäckträgers wie einem Heck-Fahrrad- Gepäckträger oder einem ähnlichen Gepäckträger mit Streben.

Adaptersysteme oder Befestigungsvorrichtungen zum Befestigen von Taschen an Gepäckträgern, insbesondere zum Befestigen von Taschen oder Behältnissen an einem Fahrradgepäckträger sind in verschiedenen Varianten bekannt. Sehr oft werden Taschen an der Seite eines Gepäckträgers befestigt und allgemein als Fahrradtaschen oder auch Taschen fürs Fahrrad bezeichnet. Auch für das Mitführen von Taschen und/oder Behältern auf der Oberseite eines Gepäckträgers sind verschiedene Varianten bekannt, welche auch unterschiedlichen Anforderungen gerecht werden sollen.

Die DE102009030000A1 offenbart eine Ausführung einer Tasche, welche auf ihrer Unterseite auf einer Seite ein Hakenelement besitzt, welches durch seitliches Aufschieben der Tasche auf den Gepäckträger um eine Längsstrebe des Gepäckträgers greift und damit die Tasche führt. Auf der gegenüberliegenden Seite des Taschenbodens ist ein Klettband angeordnet, welches sich um eine weitere Strebe führen lässt und somit die Tasche fixieren soll.

In der DE1930993 wird eine Tasche offenbart, welche auf ihrer Unterseite mit einem mittigen Spannelement ausgerüstet ist, welches mit einer Feder belastet ist und die beiden Teile des Elements seitlich nach außen drückt. Durch einführen einer Seite des Spannelementes um eine Strebe an der Oberseite eines Gepäckträgers greift eine Art Haken um eine Strebe des Gepäckträgers und das gegenüber liegende Element des Spannelements lässt sich durch Drücken gegen die Federkraft so weit zurückschieben, dass es nach dem Entspannen hinter einer weiteren Strebe zum Liegen kommt. Dadurch ist die Tasche zwischen den beiden Streben festgehalten und die Tasche auf der Oberseite des Gepäckträgers befestigt.

In der DE 202004019891U1 ist eine Tasche gezeigt, welche auf ihrer Unterseite mit Klettverschlussstreifen zur Befestigung an Streben eines Gepäckträgers ausgerüstet ist und zusätzlich über seitliche Schnappverschlüsse verfügt, welche im Abstand der Taschenbreite um dort verlaufende Längsstreben des Gepäckträgers greifen können um die Tasche zu fixieren.

Weiterhin offenbart das Dokument EP3281852A1 ein Adaptersystem zur Anbringung von Taschen oder Behältern auf der Oberseite eines Gepäckträgers mit lösbaren Fixierelementen zum Umgreifen und/oder Angreifen und/oder Eingreifen an Streben eines Gepäckträgers, wobei die Position der Fixierelemente verstellbar ausgeführt ist und an Streben des Adaptersystems angeordnet sind, wobei wenigstens eine Traverse mit einer Mehrzahl von ihrer, dem Gepäckträger zugewandten, Oberfläche hervorstehenden Halteelementen ausgeführt ist.

Weiterhin bekannt sind Systeme mit einer auf dem Gepäckträger zu montierenden Haltevorrichtung an welche dann wiederum Taschen befestigt werden können. Die Haltevorrichtung sowie die Tasche verfügen dafür über entsprechende, korrespondierende Kopplungselemente. Die auf dem Gepäckträger montierte Haltevorrichtung wird dabei in der Regel fest mit dem Gepäckträger verbunden und ragt über die Oberseite des Gepäckträgers hinaus.

Dieses Auftragen auf die Oberseite des Gepäckträgers ist aber zunehmend störend, da dadurch die Oberseite des Gepäckträgers im Betrieb ohne aufgesetzte Tasche nicht mehr voll nutzbar ist und die Haltevorrichtung störend ist.

Die anderen bekannten Taschen und/oder Befestigungslösungen für Taschen und/oder Behälter funktionieren zum Teil an einem definierten Gepäckträger zufriedenstellend, haben aber den Nachteil, dass diese die Anbringung oder Befestigung an einem anderen Gepäckträger nicht oder nur bedingt unterstützen.

Dabei spielt insbesondere die Position der Streben des Gepäckträgers, deren Abstand zueinander und/oder der Durchmesser der Streben eine entscheidende Rolle. Ohne beispielsweise genau definierten Abstand der Längsstreben zueinander lassen sich die Varianten mit seitlichen Schnapphaken gemäß DE 202004019891 oder dem federbelasteten Spannelement nach DE1930993 nicht verwenden. Dies ist sowohl beim Wechsel der Tasche von einem Fahrrad zu einem anderen und natürlich beim Ersatz des Fahrrads durch ein neues störend da die Tasche durchaus weiterverwendet werden könnte aber bedingt durch die genannten Erfordernisse nicht mehr an einem anderen Gepäckträger befestigt werden kann.

Als weiterer Nachteil bei bekannten Taschen zur Anbringung auf der Oberseite des Gepäckträgers hat sich gezeigt, dass insbesondere die Versionen mit einem oder mehreren Klettbändern zur Befestigung keine ausreichende Stabilität erreichen und/oder die Bänder in ihrer Haltekraft während der Verwendung oder alterungsbedingt stark nachlassen.

Die so auf einem Gepäckträger mitgeführten Taschen oder Behältnisse rutschen daher beim Fahren oft in ihrer Längs- und/oder Querposition auf der Oberseite entlang, was nach einiger Zeit des Gebrauchs zu einer Lockerung der Tasche auf dem Gepäckträger führt.

Aufgabe der vorliegenden Erfindung ist es daher, ein Adaptersystem zur Anbringung von Taschen oder Behältern an Gepäckträgern, insbesondere zur Anbringung von Taschen oder Behältern auf der Oberseite eines Gepäckträgers zu schaffen, welches die genannten Nachteile reduziert oder vermeidet. Insbesondere ist die Aufgabe der Erfindung die Oberseite des Gepäckträgers im Falle des nicht Mitführens der Tasche plan belassen zu können und eine ausreichend hohe Stabilität der Befestigung beim Anbringen der Tasche zu ermöglichen. Auch die leichte Montage und Demontage der Tasche oder eines Behälters auf dem Gepäckträger ist Aufgabe der Erfindung.

Diese Aufgabe wird mit den Merkmalen des kennzeichnenden Teils des Anspruchs 1 gelöst. Fortbildungen und vorteilhafte Ausführungen der Erfindung sind in den weiteren Ansprüchen umfasst.

Erfindungsgemäß ist ein Adaptersystem zur Anbringung von Taschen oder Behältern an Gepäckträgern, insbesondere zur Anbringung von Taschen oder Behältern auf der Oberseite eines Gepäckträgers mit lösbaren Fixierelementen zum Umgreifen und/oder Angreifen und/oder Eingreifen an Streben eines Gepäckträgers, wobei die Position der Fixierelemente verstellbar ausgeführt ist und an Streben und/oder Traversen oder Platten oder Rahmen des Adaptersystems angeordnet sind, wobei wenigstens eine, Strebe und/oder Traverse und/oder Platte, mit einer Mehrzahl von ihrer, dem Gepäckträger zugewandten, Oberfläche hervorstehenden Halteelementen ausgeführt ist.

Die Haltelemente können dabei in einer einfachen Ausführung als Noppenplatte ausgebildet sein, welche auf der Unterseite des Adaptersystems angeordnet ist und mit den hervorstehenden als Noppen ausgeführten Halteelementen beim Aufsetzen auf den Gepäckträger gegen die Längs- und/oder Querstreben drückt oder auf diesen aufsitzt. Durch die Ausführung der wenigstens hervorstehenden Haltelemente in einem wenigstens teilelastischen Material wird beim Fixieren des Adaptersystems mittels der lösbaren Fixierelemente zum Umgreifen und/oder Angreifen und/oder Eingreifen an Streben eines Gepäckträgers das Adaptersystem zusätzlich gegen Verrutschen auf der Oberseite des Gepäckträgers gesichert. Hierbei werden die hervorstehenden, als Noppen ausgeführten Halteelemente gegen die Streben der Oberseite des Gepäckträgers gedrückt wodurch mittels Reibung und/oder Anstoßen der Halteelemente an den Streben die Position des Adaptersystems zusätzlich gesichert wird.

Erfindungsgemäß ist die Unterseite des Adaptersystems als eine wenigstens teilweise ausgehöhlten Platte oder Traverse ausgebildet welche mit einer Mehrzahl von Durchbrüchen an der, dem Gepäckträger zugewandten, Unterseite versehen ist. Durch diese Durchbrüche ragen einzelne oder auf einer Matte angeordnete, in der Platte oder Traverse gesicherte, Halteelemente hervor. Diese hervorstehenden Halteelemente sind bevorzugt mit einer Gegenkraft ausgebildet, welche mittels Verwendung einer Federkraft und/oder eines reversiblen, elastischen Druckmaterials für das Hervordrücken der Haltelemente aus den Durchbrüchen der Platte oder Traverse sorgt. Beim Aufsetzen des Adaptersystems mit beispielsweise einer Tasche werden die Halteelement durch die Aufsetzkraft und/oder das Eigengewicht des Adaptersystems und der Tasche an den Stellen an welchen diese mit den Streben des Gepäckträgers in Berührung kommen leicht eingedrückt und die weiter hervorstehenden Haltelemente stoßen an den Seiten der Streben an. Hierdurch wird ein Verrutschen des Adaptersystems nach Fixierung mittels der Fixierelementen des Adaptersystems an den Gepäckträgerstreben, zusätzlich verhindert.

Im Folgenden wird die Erfindung anhand von Zeichnungen beispielhaft näher beschrieben, dabei zeigen:
- Fig. 1: eine perspektivische Ansicht auf ein Adaptersystem zur Anbringung von Taschen oder Behältern an Gepäckträgern
- Fig. 2: eine perspektivische Ansicht eines Adaptersystems, angeordnet an einem Fahrradkorb.
- Fig. 3: eine perspektivische Ansicht eines Adaptersystems, angeordnet an einem Fahrradkorb über einem Gepäckträger.
- Fig. 4: eine Heckansicht auf einen Gepäckträger und einem Adaptersystem.
- Fig. 5: eine perspektivische Ansicht eines Adaptersystems mit angeordnetem Fahrradkorb, angebracht an einem Gepäckträger.
- Fig. 6: eine Ansicht von der Unterseite des Adaptersystems mit Tasche, angebracht an einem Gepäckträger.
- Fig. 7: eine weitere Ansicht von der Unterseite des Adaptersystems mit Tasche, angebracht an einem Gepäckträger.

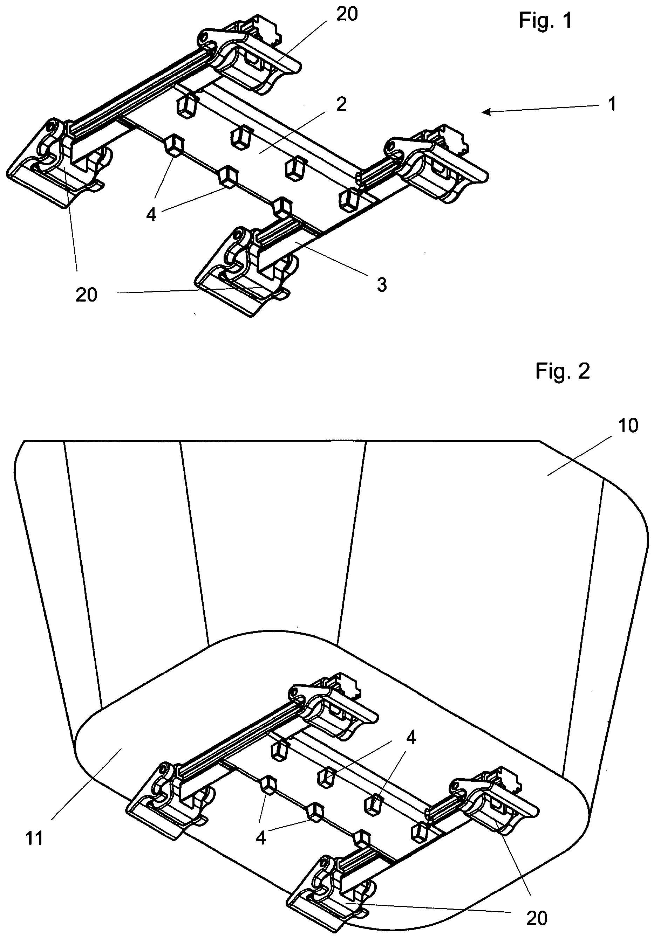

In Fig. 1 bis Fig. 5 ist ein Adaptersystem 1 zur Anbringung von Taschen 10 oder Behältern an Gepäckträgern 21, insbesondere zur Anbringung von Taschen oder Behältern auf der Oberseite eines Gepäckträgers mit lösbaren Fixierelementen 20 zum Umgreifen und/oder Angreifen und/oder Eingreifen an Streben 22, 23 eines Gepäckträgers gezeigt. Die Tasche oder das Behältnis ist dabei bevorzugt mit dem Adaptersystem fest verbunden, kann aber in Ausführungen auch von der Tasche trennbar mittels Verschraubungen ausgeführt sein.

In der beispielhaften, gezeigten Ausführung verfügt das Adaptersystem über, zwei Streben 3 mit einer verbindenden Mitteltraverse 2, wobei an den Streben 3 jeweils im Bereich jedes Endes lösbare Fixierelemente 20 angeordnet sind, mittels welcher des gezeigte Adaptersystem in dieser Ausführung an oder um die Längsstreben 22 eines Gepäckträgers 21 angebracht werden kann. Bevorzugt sind die Fixierelemente wenigstens entlang der Streben 3 verschiebbar ausgeführt wodurch das Adaptersystem leicht an Geometrien verschiedenen Gepäckträger anpassbar ist. Gleiches gilt für die Position der beiden Streben 3, welche in der Mitteltraverse verschiebbar ausgeführt werden können um auch unterschiedlich breite Gepäckträger ausrüsten zu können. Wie in der Fig. 1 gut zu erkennen, ist das Adaptersystem zwischen den beiden Streben 3 mit einer, als wenigstens teilweise ausgehöhlte, Grundplatte bzw. Gehäuse 2 ausgebildet wobei dieses über Durchbrüche für hervorstehende Haltemittel 4, welche Noppen artig ausgebildet sind, verfügt. Die aus dem Gehäuse 2 hervorstehenden Haltemittel 4 sind bevorzugt im Inneren des Gehäuses mit einer, eine Gegenkraft erzeugenden Ausgestaltung ausgeführt. Dies können einzelne Federelemente für jedes einzelne Haltemittel, eine gemeinsame, mit Federkraft beaufschlagte, Platte, welche alle Haltemittel gleichzeitig erregt oder eine elastische Platte oder eine Schaumstoffplatte oder dergleichen sein.

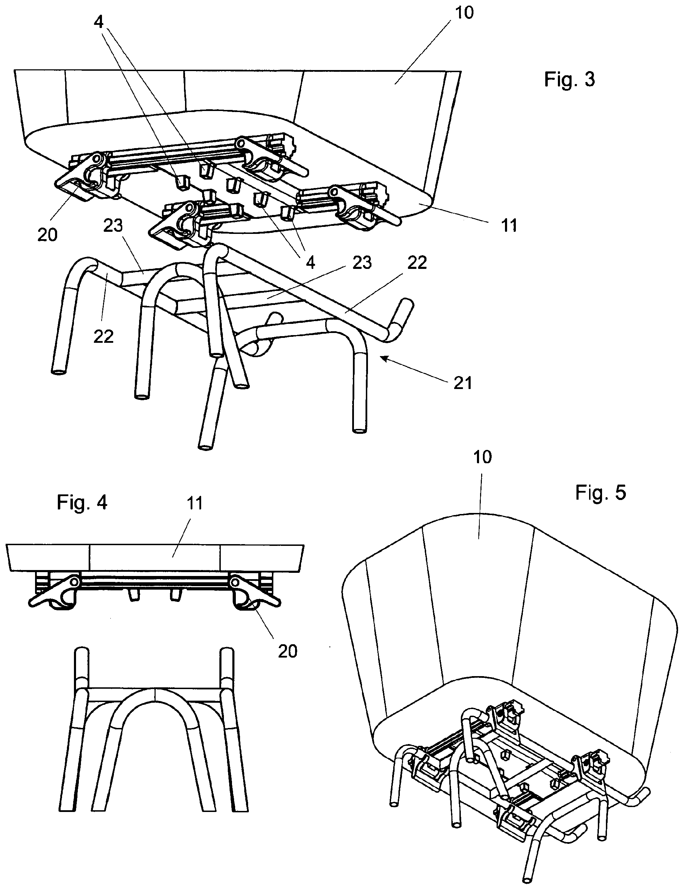

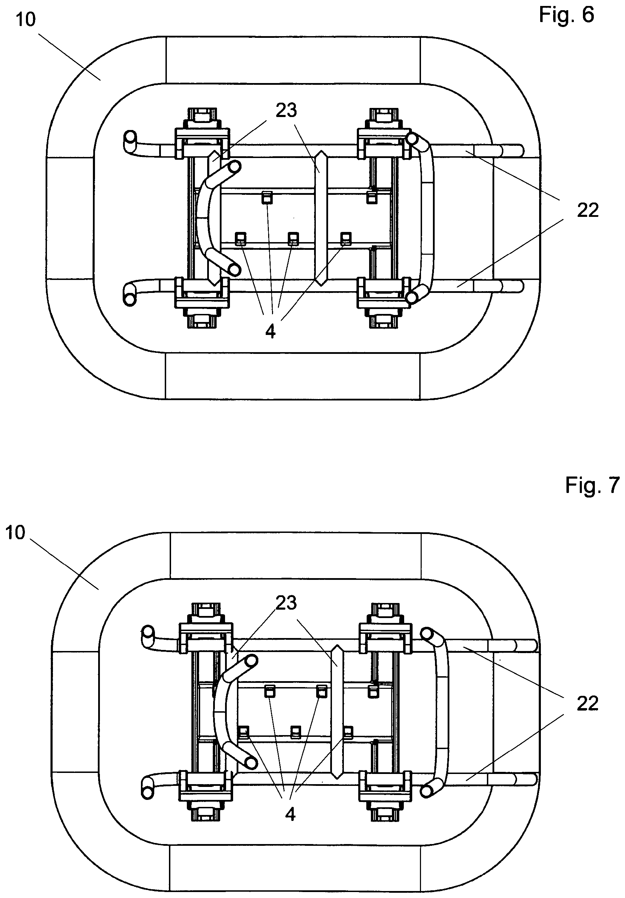

Durch das Aufsetzen des Adaptersystems auf einen Gepäckträger, wie in Fig. 3 und Fig. 5 gezeigt werden einige der Haltemittel 4 beispielsweise auf die Streben 22, 23 des Gepäckträgers 21 gedrückt wobei andere Haltemittel vor oder hinter einer, in diesem Fall, Querstrebe 23 des Gepäckträgers wieder ausfahren. Mittels der Fixierelemente 20 wird das Adaptersystem am Gepäckträger angebracht und fixiert was durch den Kontakt der Haltemittel 4 auf den Streben des Gepäckträgers, hinsichtlich Verrutschens, unterstützt und verstärkt wird. Zusätzlich blockieren, nicht auf den Streben des Gepäckträgers aufgesetzte und damit vor einer Querstrebe 23 des Gepäckträgers herausragende Haltemittel ebenfalls eine Bewegung des Adaptersystems in eine bestimmte Richtung gegen Verrutschen. Dies ist in der Fig. 7 gut zu erkennen, hier ist jeweils ein Haltemittel 4 vor einer Querstrebe 23 des Gepäckträgers 21 herausgefahren und verhindert damit wirkungsvoll ein Verrutschen des Adaptersystems entlang der Oberseite des Gepäckträgers.

Nachdem bevorzugte Ausführungen der Erfindung in Bezug auf die beiliegenden Zeichnungen beschrieben wurden, ist festzuhalten, dass die Erfindung nicht auf diese genauen Ausführungen beschränkt ist und dass verschiedene Änderungen und Modifizierungen daran von einem Fachmann ausgeführt werden können, ohne dass vom Umfang der Erfindung, wie er in den beiliegenden Ansprüchen definiert ist abgewichen wird.

## Patentansprüche

1. Adaptersystem zur Anbringung von Taschen oder Behältern auf der Oberseite eines Gepäckträgers (21) wie einem Heck- Fahrrad- Gepäckträger oder einem ähnlichen Gepäckträger mit Streben mit lösbaren Fixierelementen (20) zum Umgreifen und/oder Angreifen und/oder Eingreifen an Streben (22, 23) eines Gepäckträgers, wobei die Position der Fixierelemente (20) verstellbar ausgeführt ist und an Streben (3) und/oder Traversen (2) oder Platten oder Rahmen des Adaptersystems angeordnet sind,
wobei wenigstens eine, Strebe (3) und/oder Traverse (2) und/oder Platte (2), mit einer Mehrzahl von ihrer, dem Gepäckträger zugewandten, Oberfläche hervorstehenden Halteelementen (4) ausgeführt ist, wobei wenigstens eine, parallel zu den Längsstreben (22) oder zu den Querstreben (23) eines Gepäckträgers (21) verlaufende Strebe, Traverse, Schiene oder Platte als wenigstens teilweise ausgehöhlte Gehäuseplatte (2) mit einer Mehrzahl von Durchbrüchen für, aus den Durchbrüchen hervorragende, Haltelemente (4) ausgeführt ist..

2. Adaptersystem nach Anspruch 1 ,
**dadurch gekennzeichnet,**
**dass** die Haltelemente (4) wenigstens teil- elastisch und/oder teil zusammendrückbar ausgebildet sind.

3. Adaptersystem nach Anspruch 2,
**dadurch gekennzeichnet,**
**dass** die Haltelemente (4) in einem reibungserhöhenden Material ausgeführt sind.

4. Adaptersystem nach Anspruch 1,
**dadurch gekennzeichnet,**
**dass** die Mehrzahl von Halteelementen (4) auf einer Platte angeordnet sind, welche auf der Oberseite der parallel zu den Längsstreben des Gepäckträgers verlaufenden Strebe Traverse oder Schiene (2) angebracht oder aufgebracht ist.

5. Adaptersystem nach Anspruch 1,
**dadurch gekennzeichnet,**
**dass** die Halteelemente als einzelne, in der Gehäuseplatte (2) angeordnete und gesicherte, durch die Durchbrüche hervorstehende, Halteelemente ausgeführt sind.

6. Adaptersystem nach Anspruch 1,
**dadurch gekennzeichnet,**
**dass** die Halteelemente als einzelne, in der Gehäuseplatte (2) angeordnete und gesicherte, durch die Durchbrüche hervorstehende, Halteelemente ausgeführt sind und einzeln oder gemeinsam mit einer, gegen Druck von außen wirkenden, Kraft beaufschlagt sind.

7. Adaptersystem nach Anspruch 1,
**dadurch gekennzeichnet,**
**dass** die Halteelemente als einzelne, in der Gehäuseplatte (2) angeordnete und gesicherte, durch die Durchbrüche hervorstehende, Halteelemente ausgeführt sind und einzeln oder gemeinsam mit einer Federkraft beaufschlagt sind.

8. Adaptersystem nach Anspruch 1,
**dadurch gekennzeichnet,**
**dass** die Halteelemente als einzelne, in der Gehäuseplatte (2) angeordnete und gesicherte, durch die Durchbrüche hervorstehende, Halteelemente ausgeführt sind und einzeln oder gemeinsam mit einer Kraft aus einem oder mehreren reversibel komprimierbaren Elementen im Inneren der Gehäuseplatte (2) beaufschlagt sind.

9. Adaptersystem nach Anspruch 8,
**dadurch gekennzeichnet,**
**dass** das vom Inneren der Gehäuseplatte (2) gegen die Halteelemente (4) wirkende komprimierbare Element aus einem Elastomermaterial oder Schaummaterial oder Gummimaterial ausgebildet ist.

## Claims

1. An adapter system for attaching bags or containers to the upper side of a luggage rack (21) such as a rear rack, bike rack, luggage rack or a similar luggage rack with struts with detachable fixing elements (20) for engaging around and/or engaging with and/or engaging in struts (22, 23) of a luggage rack, wherein the position of the fixing elements (20) is adjustable and the latter are arranged on struts (3) and/or crossbars (2) or plates or frames of the adapter system,
wherein at least one strut (3) and/or crossbar (2) and/or plate (2) is designed with a plurality of holding elements (4) protruding from its surface facing the luggage rack, wherein at least one strut, crossbar, rail or plate running parallel to the longitudinal struts (22) or to the transverse struts (23) of a luggage rack (21) is designed as an at least partially hollowed-out housing plate (2) with a plurality of perforations for holding elements (4) protruding out of the perforations.

2. The adapter system according to claim 1,
**characterised in that**
the holding elements (4) are designed at least partially elastic and/or partially compressible.

3. The adapter system according to claim 2,
**characterised in that**
the holding elements (4) are made of a friction-increasing material.

4. The adapter system according to claim 1,
**characterised in that**
the plurality of holding elements (4) are arranged on a plate which is attached to or applied on the upper side of the strut, crossbar or rail (2) running parallel to the longitudinal struts of the luggage rack.

5. The adapter system according to claim 1,
**characterised in that**
the holding elements are designed as individual holding elements which are arranged and secured in the housing plate (2) and project through the perforations.

6. The adapter system according to claim 1,
**characterised in that**
the holding elements are designed as individual holding elements arranged and secured in the housing plate (2) protruding through the perforations and are subjected individually or jointly to a force acting against external pressure.

7. The adapter system according to claim 1,
**characterised in that**
the holding elements are designed as individual holding elements arranged and secured in the housing plate (2) protruding through the perforations and are individually or jointly acted upon by a spring force.

8. The adapter system according to claim 1,
**characterised in that**
the holding elements are designed as individual holding elements arranged and secured in the housing plate (2) protruding through the perforations and are subjected individually or jointly to a force from one or more reversibly compressible elements in the interior of the housing plate (2).

9. The adapter system according to claim 8,
**characterised in that**
the compressible element acting from the interior of the housing plate (2) against the holding elements (4) is made of an elastomer material or foam material or rubber material.

## Revendications

1. Système adaptateur
pour monter des sacoches ou des conteneurs sur la face supérieure d'un porte-bagages (21), comme un porte-bagages arrière de bicyclette ou un porte-bagages analogue avec des montants avec des éléments de fixation amovibles (20) pour envelopper et/ou saisir et/ou accrocher sur des montants (22, 23) d'un porte-bagages, sachant que la position des éléments de fixation (20) est réalisée réglable et que ces éléments sont disposés sur des montants (3) et/ou des traverses (2) ou des plaques ou un cadre du système adaptateur,
sachant qu'
au moins un montant (3) et/ou une traverse (2) et/ou une plaque (2), est exécuté(e) avec une pluralité de leurs éléments de retenue (4) tournés vers le porte-bagages, faisant saillie de la surface, sachant qu'au moins un montant, une traverse, un rail ou une plaque passant parallèlement aux montants longitudinaux (22) ou aux montants transversaux (23) d'un porte-bagages (21) est exécuté(e) sous la forme d'une plaque de boîtier (2) au moins en partie évidée avec une pluralité d'ouvertures de passage pour les éléments de retenue (4) faisant saillie des ouvertures de passage.

2. Système adaptateur selon la revendication 1,
**caractérisé en ce que**
les éléments de retenue (4) sont constitués au moins en partie élastiques et/ou en partie compressibles.

3. Système adaptateur selon la revendication 2,
**caractérisé en ce que**
les éléments de retenue (4) sont réalisés dans un matériau augmentant le frottement.

4. Système adaptateur selon la revendication 1,
**caractérisé en ce que**
la pluralité d'éléments de retenue (4) est disposée sur une plaque, laquelle est montée ou placée sur la face supérieure du montant, de la traverse ou du rail (2) passant parallèlement aux montants longitudinaux du porte-bagages.

5. Système adaptateur selon la revendication 1,
**caractérisé en ce que**
les éléments de retenue sont exécutés sous la forme d'éléments de retenue individuels disposés et fixés dans la plaque de boîtier (2), faisant saillie à travers les ouvertures de passage.

6. Système adaptateur selon la revendication 1,
**caractérisé en ce qu'**un tenon
les éléments de retenue sont exécutés sous la forme d'éléments de retenue individuels disposés et fixés dans la plaque de boîtier (2), faisant saillie à travers les ouvertures de passage et sont sollicités individuellement ou en commun par une force agissant de l'extérieur contre la pression.

7. Système adaptateur selon l'une quelconque des revendication 1,
**caractérisé en ce que**
les éléments de retenue sont les éléments de retenue sont exécutés sous la forme d'éléments de retenue disposés et fixés dans la plaque de boîtier (2), faisant saillie à travers les ouvertures de passage et sont sollicités individuellement ou en commun par une force élastique.

8. Système adaptateur selon la revendication 1,
**caractérisé en ce que**
les éléments de retenue sont exécutés sous la forme d'éléments de retenue individuels disposés et fixés dans la plaque de boîtier (2), faisant saillie à travers les ouvertures de passage et sont sollicités à l'intérieur de la plaque de boîtier (2), individuellement ou en commun par une force d'un ou plusieurs éléments compressibles de façon réversible.

9. Système adaptateur selon la revendication 8,
**caractérisé en ce que**
l'élément compressible agissant de l'intérieur de la plaque de boîtier (2) contre les éléments de retenue (4) est constitué d'un matériau élastomère ou d'un matériau de mousse ou d'un matériau à base de caoutchouc.
